# EUROPÄISCHE PATENTSCHRIFT

(11) **EP 0 616 023 B1**
(45) Veröffentlichungstag und Bekanntmachung des Hinweises auf die Patenterteilung: **17.01.1996**
(21) Anmeldenummer: 93104290.7
(22) Anmeldetag: 16.03.1993
(51) Int. Cl.: C10J 3/48, C10J 3/86, C10J 3/78

(54) **Vergasungsapparat für die Druckvergasung von feinteiligen Brennstoffen**
Gasification apparatus for gasification under pressure of fine particulate fuels
Appareil de gazéification pour la gazéification sous pression de combustibles finement divisés

(43) Veröffentlichungstag der Anmeldung: 21.09.1994
(73) Patentinhaber: Krupp Koppers GmbH, D-45143 Essen (DE)
(72) Erfinder: Dürrfeld, Dr. Rainer, W-4300 Essen 15 (DE); Kowoll, Dr. Johannes, W-4630 Bochum 1 (DE); Kuske, Eberhard, Dr., W-4300 Essen 1 (DE); Niermann, Hans, W-4300 Essen 1 (DE); Wilmer, Gerhard, W-4320 Hattingen (DE); Wolff, Dr. Joachim, W-4300 Essen 1 (DE)
(74) Vertreter: Andrejewski, Walter, Dr.

(56) Entgegenhaltungen:
- EP-A- 0 099 833
- DE-A- 1 596 323
- DE-A- 3 809 313
- FR-A- 1 070 615
- FR-A- 2 500 470

## Beschreibung

Die Erfindung betrifft einen Vergasungsapparat für die Druckvergasung von feinteiligen Brennstoffen im Zuge der Erzeugung von Brauchgas mit einer Eintrittseinrichtung für die feinteiligen Brennstoffe, einer Gaseintrittseinrichtung, einem Vergasungsreaktor, einem Quenchrohr für das aus dem Vergasungsreaktor austretende Rohgas, einem Konvektionskessel mit Konvektionsheizflächen für die Aufnahme der Abhitze des Rohgases und einer Austrittseinrichtung für Asche. - Feinteilige Brennstoffe meint feinkörnige bis staubförmige Brennstoffe. Insbesondere mag es sich um Kohle handeln. Die Energie wird dem Vergasungsreaktor über Brenner zugeführt, die zumeist auch den feinteiligen Brennstoff mitführen. In thermodynamischer Hinsicht wird die Vergasungsreaktion so gesteuert oder geregelt, wie es für die Erzeugung eines Brauchgases vorgegebener Zusammensetzung erforderlich ist. Im Quenchrohr werden Reaktionen durch Abschreckung gleichsam eingefroren. Dazu wird ein Quenchgas zugeführt. Der Ausdruck Gas meint auch Dämpfe. Insoweit wird auch im Rahmen der Erfindung nach der herrschenden Lehre gearbeitet. Die Erfindung beschäftigt sich mit der apparativen Seite bei der Druckvergasung von feinteiligen Brennstoffen im Zuge der Erzeugung von Brauchgas.

Bei einem Vergasungsapparat des eingangs beschriebenen Aufbaus sind die Wandungen des Vergasungsreaktors, des Quenchrohres und des Konvektionskessels und anderer Bauteile zum Zwecke der Heißkühlung, z. B. in Form einer Siedewasserkühlung, Rohrwandungen aus verschweißten parallelen Rohren oder mit solchen Rohrwandungen versehen. Das gilt auch für den erfindungsgemäßen Vergasungsapparat. Es versteht sich, daß die über die Rohrwandungen aufgenommene Wärme der Nutzung zugeführt wird.

Bei dem bekannten Vergasungsapparat, von dem die Erfindung ausgeht (EP 0 115 094 A2), bildet der Vergasungsapparat mit dem Quenchrohr ein erstes turmartiges Bauwerk mit und in einem ersten Druckbehälter, wobei hinter einer ausgeprägten Quenchzone das Quenchrohr auch als Strahlungskessel ausgeführt und mit entsprechenden Strahlungsflächen versehen sein kann. Der Konvektionskessel bildet ein zweites turmartiges Bauwerk mit und in einem zweiten Druckbehälter. Die Druckbehälter können gekühlt sein. Die beiden Bauwerke sind kopfseitig über einen gekühlten Verbindungskanal, durch den das Rohgas aus dem Quenchrohr oder Strahlungskessel in den Konvektionskessel übertritt, verbunden, wobei der Verbindungskanal als Wärmedehnungskompensator ausgelegt oder mit einem solchen versehen ist. Das ist aufwendig und verlangt aufwendige Maßnahmen für die Zuführung und Abführung des Quenchgases sowie des Wärmeträgers in den Rohrwänden des Quenchrohres, des Strahlungskessels und des Konvektionskessels. Die Errichtung von zwei Bauwerken wird aus thermodynamisch-funktionellen Gründen und auch deshalb durchgeführt, weil die apparativen Einrichtungen in den beiden Bauwerken in unterschiedlichen Temperaturbereichen arbeiten und unterschiedliche Wärmedehnungen auftreten. Im Ergebnis ist für eine bestimmte Leistung an zu erzeugendem Brauchgas ein großes Bauvolumen mit entsprechender Masse erforderlich. Das Bauvolumen/Leistungsverhältnis ist verbesserungsbedürftig.

Der Erfindung liegt die Aufgabe zugrunde, einen Vergasungsapparat hoher Leistung für die Druckvergasung von feinteiligen Brennstoffen im Zuge der Erzeugung von Brauchgas anzugeben, bei dem gegenüber der bekannten Ausführungsform das Bauvolumen/Leistungsverhältnis beachtlich verbessert ist, und zwar ohne daß Nachteile in thermodynamisch-funktioneller Hinsicht in Kauf genommen werden müssen.

Zur Lösung dieser Aufgabe ist Gegenstand der Erfindung ein Vergasungsapparat für die Druckvergasung von feinteiligen Brennstoffen im Zuge der Erzeugung von Brauchgas mit einer Eintrittseinrichtung für die feinteiligen Brennstoffe, einer Gaseintrittseinrichtung, einem Vergasungsreaktor, einem Quenchrohr für das aus dem Vergasungsreaktor austretende Rohgas, einem Konvektionskessel mit Konvektionsheizflächen für die Aufnahme der Abhitze des Rohgases und einer Austrittseinrichtung für die Asche, wobei die Kombination der folgenden Merkmale verwirklicht ist
a) der Vergasungsreaktor, das Quenchrohr und der Konvektionskessel mit einer Kesseleinhausung sind in einem Druckbehälter angeordnet, wobei der Konvektionskessel das Quenchrohr konzentrisch umgibt und der Vergasungsreaktor koaxial unter dem Quenchrohr angeordnet ist,
b) oberhalb des Quenchrohres ist in der Kesseleinhausung eine Umlenkeinrichtung für das aus dem Quenchrohr austretende und in den Konvektionskessel einzuleitende Rohgas angeordnet oder ausgebildet,
c) in einem Bereich zwischen Vergasungsreaktor und Konvektionskessel ist eine Rohgasaustrittseinrichtung angeordnet, mit der das Rohgas aus der Kesseleinhausung und aus dem Druckbehälter abführbar ist,
d) der Vergasungsreaktor ist im unteren Teil des Druckbehälters in diesem festpunktgelagert,
e) die Konvektionsheizflächen sind von dem Quenchrohr und der Kesseleinhausung getragen,
f) das Quenchrohr und die Kesseleinhausung sind in ihrem unteren Bereich, oberhalb der Rohgasaustrittseinrichtung, auf Lastabtragungselementen aufgesetzt, die Rohgasdurchlässe aufweisen und am Druckbehälter festpunktgelagert sind,
g) zwischen Vergasungsreaktor und Quenchrohr ist umlaufend ein das Quenchrohr und den Vergasungsreaktor trennender Quenchgaseinführungsspalt angeordnet,
wobei zwischen dem Quenchrohrbereich unterhalb der Lastabtragungselemente einerseits und dem Vergasungsreaktor oberhalb von dessen Festpunktlagerung andererseits unterschiedliche Wärmedehnungen zugelassen sind und dazu der Quenchgaseinführungsspalt zusätzlich als Wärmedehnungsausgleichsspalt dimensioniert ist. -

Auf diese Weise stellt der erfindungsgemäße Vergasungsapparat ein einheitliches Bauwerk des Apparatebaus dar. Es versteht sich, daß der Druckbehälter für den Druck ausgelegt ist, mit dem die Druckvergasung arbeitet. - Über die Lastabtragungselemente wird die gesamte Last aus Quenchrohr, Kesseleinhausung und Konvektionsheizflächen abgetragen.

Ein Vergasungsapparat für die Vergasung von feinteiligen Brennstoffen im Zuge der Erzeugung von Brauchgas, der als einheitliches Bauwerk des Apparatebaus ausgeführt ist, ist an sich bekannt (DE-PS 23 42 079, 1973). Hier befindet sich am Rohgasaustritt des Vergasungsreaktors eine Quencheinrichtung geringer Bauhöhe und ein Strahlungskessel schließt an. Das Rohgas passiert, nach oben strömend, Heizflächen eines Speisewasservorwärmers und tritt aus dem Kopf des Druckbehälters aus. Ein solcher Vergasungsapparat bringt nicht die Leistungen, die in der modernen Technik verlangt werden. Wärmedehnungsprobleme werden nicht behandelt. Letzteres gilt auch für Ausführungen, bei denen das erzeugte Gas im Konvektionsbereich zunächst nach oben geführt, dann nach unten umgelenkt und einem am unteren Ende des Konvektionsbereiches angeordneten Gasaustritt zugeführt wird (DE-A 15 96 323, FR-A 10 70 615).

Die Erfindung geht von der Erkenntnis aus, daß bei einem Vergasungsapparat des eingangs beschriebenen Aufbaus das Quenchrohr gleichsam in den Konvektionskessel eingesetzt werden kann und daß dieses Aggregat mit dem Vergasungsreaktor in dem Druckbehälter zu einem einheitlichen Bauwerk integriert werden kann, ohne daß in thermodynamischer Hinsicht Nachteile in Kauf genommen werden müßten. Im Gegenteil, die Wärmewirtschaft wird verbessert. In dem gleichsam hohlzylindrischen Konvektionskessel können großflächige Konvektionsheizflächen untergebracht werden, auch in mehreren sogenannten Bündeln übereinander, wobei die Bündel selbständig von dem Quenchrohr und der Kesseleinhausung getragen sind. Zwar treten an dem Quenchrohr verhältnismäßig große Wärmedehnungen auf, weil dieses innenseitig und außenseitig von dem heißen Rohgas beaufschlagt wird, daraus resultieren jedoch in bezug auf das erfindungsgemäß integrierte Bauwerk keine statischen oder stabilitätsmäßigen Zwänge, wenn in Kombination zu den beschriebenen Maßnahmen die weiteren Merkmale des Patentanspruches 1 verwirklicht werden und insbesondere die beiden selbständigen Festpunktlagerungen wie beschrieben eingerichtet werden sowie der Quenchgaseinführungsspalt zugleich als Wärmedehnungsausgleichsspalt eingesetzt und dimensioniert wird.

Im einzelnen bestehen im Rahmen der Erfindung mehrere Möglichkeiten der weiteren Ausbildung und Gestaltung. So kann der Druckbehälter zugleich als Tragwerk für den Vergasungsreaktor, das Quenchrohr und den Konvektionskessel im Kesselhaus statisch und stabilitätsmäßig ausgelegt sein. Die Anordnung kann aber auch so getroffen werden, daß der Druckbehälter nur bereichsweise die aufzunehmenden Beanspruchungen abträgt und seinerseits in einem Gerüst gelagert ist, an welches es die Beanspruchungen weitergibt. Der erfindungsgemäße Einbau des Quenchrohres in den Konvektionskessel erlaubt es, die Anordnung so zu treffen, daß im Konvektionskessel Staub- und Temperatursträhnen, die die Thermodynamik des Konvektionskessels beeinträchtigen könnten, nicht auftreten. Dazu lehrt die Erfindung, die Umlenkeinrichtung als haubenförmige Prallumlenkeinrichtung auszubilden. Dabei findet eine in bezug auf die Umlenkachse sehr symmetrische 180° Umlenkung statt. Es versteht sich, daß die Rohgasaustrittseinrichtung eine Vorrichtung für die Austragung von Schlacke- und/oder Aschepartikeln aufweist.

Bei dem erfindungsgemäßen Vergasungsapparat wird man im allgemeinen die Anordnung so treffen, daß der Vergasungsreaktor in seinem unteren Bereich auf Konsolen des Druckbehälters festpunktgelagert ist. Im allgemeinen wird man die Konvektionsheizflächen einseitig an Tragarmen befestigen. Vorzugsweise sind die Konvektionsheizflächen an die Tragarme angehängt. Die Tragarme ihrerseits sind an die Kesseleinhausung und an das Quenchrohr angeschlossen und zwar einspannungsfrei. Unterschiedliche Wärmedehnungen der Kesseleinhausung und des Quenchrohres führen auf diese Weise nicht zu Biegebeanspruchungen und Zwängen in den Tragarmen, die sich infolge von unterschiedlichen Wärmedehnungen leicht schrägstellen können. Die angeschlossenen Rohrleitungen sind entsprechend elastisch verformbar.

Im Rahmen der Erfindung können die Lastabtragungselemente auf verschiedene Weise ausgeführt sein. Sie tragen stets die gesamte Last aus Quenchrohr, Kesseleinhausung und Konvektionsflächen ab. Nach bevorzugter Ausführungsform der Erfindung sind die Lastabtragungselemente als starre metallische Bauteile mit Innenring, Außenring und Speichen ausgeführt, wobei die Speichenzwischenräume die Rohgasdurchlässe bilden. Innenring, Außenring und Speichen können als einheitliches Bauteil ausgeführt sein. Um in diesem Bereich aus unterschiedlichen Wärmedehnungen resultierende Zwänge zu vermeiden oder zu minimieren, lehrt die Erfindung, daß die Lastabtragungselemente an die lastaufnehmenden Elemente im Druckbehälter über beheizte Stützen oder eine beheizte Zarge an der Kesseleinhausung angeschlossen sind.

Bei dem erfindungsgemäßen Vergasungsapparat kann auf sehr einfache Weise eine Heißkühlung der Rohrwände des Quenchrohres durchgeführt werden, und zwar z. B. dadurch, daß die Lastabtragungselemente zugleich als Zuführungseinrichtung für Siedewasser einer Siedewasserkühlung der quenchrohrbildenden Rohrleitungen ausgeführt sind.

Bei dem erfindungsgemäßen Vergasungsapparat sind die beschriebenen Festpunktlagerungen wesentlich. Es resultieren aus der Festpunktlagerung der Lastabtragungselemente an dem Druckbehälter auch bei im übrigen großen Wärmedehnungen keine Probleme, wenn, abgesehen von den Rohrleitungen an und in den Lastabtragungselementen, alle Rohrleitungsverbindungen zwischen dem Quenchrohr und der Kesseleinhausung elastisch wärmedehnungsverformbar ausgelegt und angeordnet sind. Insbesondere kann bei Siedewasserkühlung die Abführung des Siedewassers aus dem Quenchrohr über oben an das Quenchrohr angeschlossene wärmedehnungsverformbare Ableitungsrohre erfolgen.

Bei dem erfindungsgemäßen Vergasungsapparat kann auf sehr einfache Weise und funktionssicher das Quenchgas zu dem Quenchgaseinführungskanal geführt werden. Dazu lehrt die Erfindung, daß der Vergasungsreaktor gegenüber der Wand des Druckbehälters einen Ringraum bildet und die Zuführung des Quenchgases zu dem Quenchgaseinführungsspalt über diesen Ringraum erfolgt, wobei der Ringraum außerdem mit einem Druckausgleichsraum in Verbindung steht, der zwischen Kesseleinhausung und Druckbehälter angeordnet ist. Auf diese Weise wird die Kesseleinhausung druckentlastet. Nach bevorzugter Ausführungsform ist der Quenchgaseinführungsspalt zwischen einem kegelförwig eingezogenen Ausgangsbauteil des Vergasungsreaktors und einer dazu komplementären Schürze des Quenchrohres gebildet, wobei das Ausgangsbauteil vergasungsreaktorraumseitig auskleidungsfrei aufgeführt ist. Darunter wird verstanden, daß feuerfeste Auskleidungen nicht verwirklicht sind, die beschriebenen Bauteile vielmehr metallisch blank ausgeführt sind. Der Kegelwinkel zur Horizontalen soll vorzugsweise etwa 60° betragen. Das Ausgangsbauteil des Vergasungsreaktors ist zweckmäßigerweise mit einem Reinigungsring versehen, der periodisch, z. B. mittels Klopfeinrichtung zum Zwecke der Abreinigung etwaig anhaftender Aschepartikel, bewegbar ist.

Die erreichten Vorteile sind zusammengefaßt darin zu sehen, daß erfindungsgemäß ein für hohe Leistungen geeigneter Vergasungsapparat entsteht, der gegenüber der eingangs beschriebenen bekannten Ausführungsform mit zwei selbständigen Bauwerken, die über einen Verbindungskanal funktionell verbunden sind, eine beachtliche Verbesserung des Bauvolumen/Leistungsverhältnisses aufweist, ohne daß nach Nachteile in thermodynamisch-funktioneller Hinsicht in Kauf genommen werden müßten.

Im folgenden wird die Erfindung anhand einer lediglich ein Ausführungsbeispiel darstellenden Zeichnung ausführlicher erläutert. Es zeigen in schematischer Darstellung
- **Fig. 1**: eine Ansicht eines erfindungsgemäßen Vergasungsapparates,
- **Fig. 2**: in gegenüber der Fig. 1 wesentlich vergrößertem Maßstab den Ausschnitt A aus dem Gegenstand der Fig. 1,
- **Fig. 3**: im Maßstab der Fig. 2 den Ausschnitt B aus dem Gegenstand nach Fig. 1,
- **Fig. 4**: im Maßstab der Fig. 2 den Ausschnitt C aus dem Gegenstand der Fig. 1,
- **Fig. 5**: in gegenüber den Fig. 1 bis 4 nochmals vergrößertem Maßstab den Ausschnitt D aus dem Gegenstand der Fig. 3,
- **Fig. 6**: einen Schnitt in Richtung E-E durch den Gegenstand der Fig. 5 und
- **Fig. 7**: in gegenüber den Fig. 1 bis 4 vergrößertem Maßstab den Ausschnitt F aus dem Gegenstand der Fig. 1.

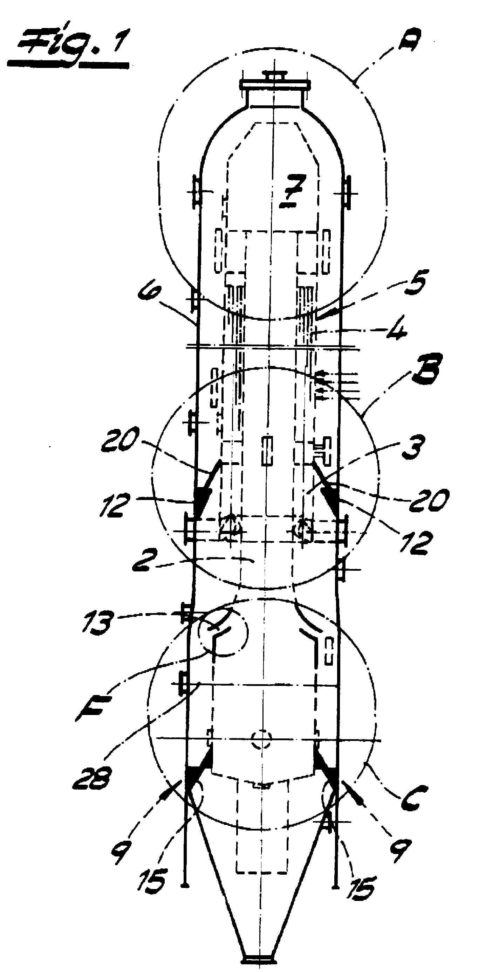

Der in den Figuren dargestellte Vergasungsapparat ist für die Druckvergasung von feinteiligen Brennstoffen im Zuge der Erzeugung von Brauchgas bestimmt und eingerichtet. In der Fig. 1 ist ein Mittelteil nicht dargestellt worden, dessen Länge etwa der Länge des Unterteils entspricht.

Zum grundsätzlichen Aufbau des Vergasungsapparates gehören ein Vergasungsreaktor 1, ein Quenchrohr 2 für das aus dem Vergasungsreaktor 1 austretende Rohgas und ein Konvektionskessel 3 mit Konvektionsheizflächen 4 für die Aufnahme der Abhitze des Rohgases. Es versteht sich, daß die Konvektionsheizflächen 4 zweckmäßigerweise in Form von konzentrischen Zylindern angeordnet sind. Wie eingangs bereits erwähnt sind die beschriebenen Apparate aus Rohrwandungen aufgebaut, die ihrerseits aus parallel geführten, miteinander verschweißten Rohren bestehen.

Man entnimmt aus der Fig. 1, daß der Vergasungsreaktor 1, das Quenchrohr 2 und der Konvektionskessel 3 mit einer Kesseleinhausung 5 in einem Druckbehälter 6 angeordnet sind. Der Konvektionskessel 3 umgibt das Quenchrohr 2 konzentrisch. Der Vergasungsreaktor 1 ist koaxial unter dem Quenchrohr 2 angeordnet. Auch die Kesseleinhausung 5 besteht zweckmäßig aus Rohrwänden. Man erkennt im Oberteil der Fig. 1, 2 die Aufhängung eines Bündels von Konvektionsheizflächen 4 am Quenchrohr 2 sowie an der Kesseleinhausung 5. Auf gleiche Weise können über die Höhe des Vergasungsapparates verteilt weitere Bündel von Konvektionsheizflächen angeordnet sein.

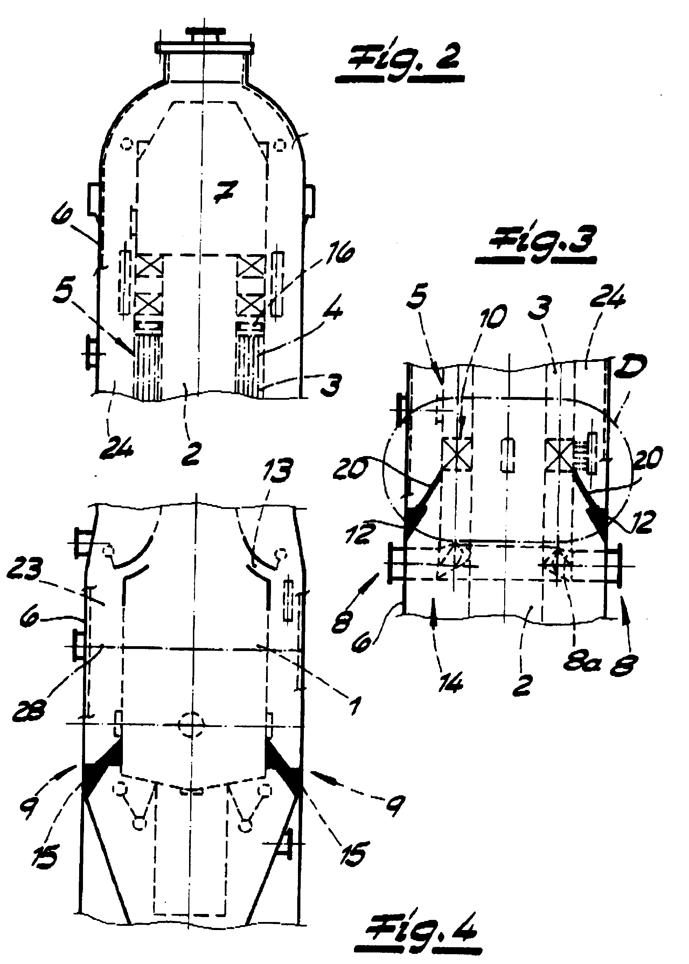

Oberhalb des Quenchrohres 2 ist in der Kesseleinhausung 5 eine Umlenkeinrichtung 7 für das aus dem Quenchrohr 2 austretende und in den Konvektionskessel 3 einzuleitende Rohgas angeordnet oder ausgebildet. Dazu wird insbesondere auch auf die Fig. 2 verwiesen. Insbesondere in der Fig. 3 erkennt man, daß in einem Bereich zwischen Vergasungsreaktor 1 und Konvektionskessel 3 eine Rohgasaustrittseinrichtung 8 angeordnet ist, mit der das Rohgas aus der Kesseleinhausung 5 und dem Druckbehälter 8 ausgeführt wird. Es erfolgt eine drallerzeugende Umlenkung des aus dem Konvektionskessel austretenden Rohgases mit Hilfe von in Fig. 3 angedeuteten Leitschaufeln 8a. Die Auslegung ist so getroffen, daß das austretende Rohgas Schlacke- und Aschepartikel mitreißt, so daß störende Ablagerungen in diesem Bereich nicht erfolgen. Die Abkühlung des Rohgases und damit der Schlackepartikel wurde soweit geführt, daß ein Anbacken nicht möglich ist. Aus der Fig. 4 entnimmt man, daß der Vergasungsreaktor 1 im unteren Teil des Druckbehälters 6 in diesem festpunktgelagert ist. Die Festpunkte 9 deuten dieses an.

Die Konvektionsheizflächen 4 sind von dem Quenchrohr 2 und der Kesseleinhausung 5 getragen. Das Quenchrohr 2 und die Kesseleinhausung 5 sind in ihrem unteren Bereich, oberhalb der Rohgasaustrittseinrichtung 8, auf Lastaustragelemente 10 aufgesetzt, die Rohgasdurchlässe 11 aufweisen und am Druckbehälter 6 festpunktgelagert sind. Insoweit wird insbesondere auf die Fig. 3, 5 und 6 mit den Festpunkten 12 verwiesen.

Insbesondere aus der Fig. 4 entnimmt man, daß zwischen Vergasungsreaktor 1 und Quenchrohr 2 ein umlaufender Quenchgaseinführungsspalt 13 angeordnet ist. Dieser trennt das Quenchrohr 2 und den Vergasungsreaktor 1. Die Anordnung ist so getroffen, daß zwischen dem Quenchrohrbereich unterhalb der Lastabtragungselemente 10 einerseits und dem Vergasungsreaktor 1 oberhalb von dessen Festpunktlagerung 9 andererseits unterschiedliche, auch druckbehälterbedingte Wärmedehnungen zugelassen sind. Dazu ist der Quenchgaseinführungsspalt 13 zusätzlich als Wärmedehnungsausgleichsspalt dimensioniert.

Im Ausführungsbeispiel und nach bevorzugter Ausführungsform der Erfindung ist der Druckbehälter 6 zugleich als Tragwerk für den Vergasungsreaktor 1, das Quenchrohr 2 und den Konvektionskessel 3 mit Kesseleinhausung 5 und statisch sowie stabilitätsmäßig entsprechend eingerichtet. Die schon erwähnte Umlenkeinrichtung 7 ist im Ausführungsbeispiel als eine haubenförmige Prallumlenkeinrichtung ausgeführt. Die Rohgasaustrittseinrichtung 8 weist eine Vorrichtung 14 für die Austragung von Schlacke- und/oder Aschepartikel auf, die im einzelnen weiter unten beschrieben wird.

Insbesondere aus der Fig. 4 entnimmt man, wie der Vergasungsreaktor 1 in seinem unteren Bereich auf Konsolen 15 des Druckbehälters 6 festpunktgelagert ist.

Die Konvektionsheizflächen 4 sind einseitig an tragenden Traversen 16 befestigt. Die Traversen 16 sind an die Kesseleinhausung 5 und an das Quenchrohr 2 einspannungsfrei angeschlossen, um Zwänge aus unterschiedlicher Wärmedehnung der Kesseleinhausung bzw. des Quenchrohres zu vermeiden. Im einfachsten Falle sind die Traversen 16 statisch als Balken auf zwei Stützen zwangfrei aufgelagert.

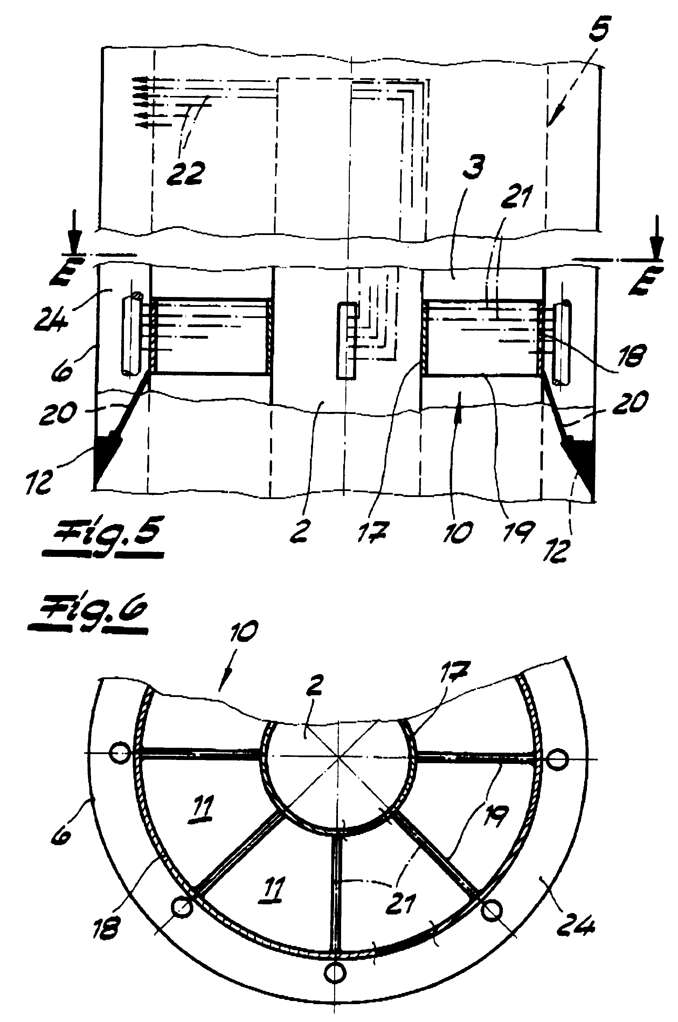

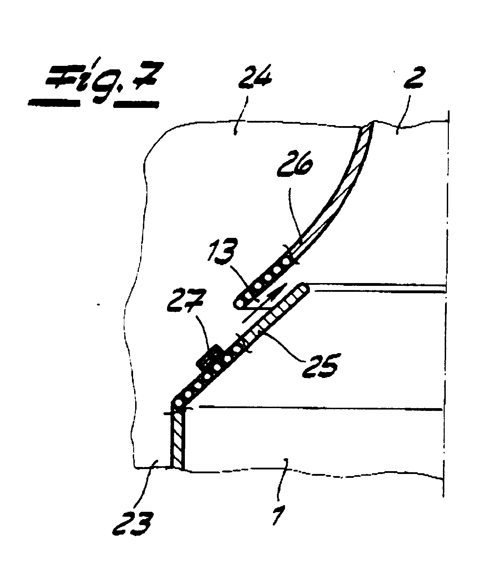

Insbesondere aus den Fig. 5 und 6 entnimmt man die Einzelheiten der Lastabtragungselemente 10. Diese sind als starre, metallische Bauteile mit Innenring 17, Außenring 18 und Speichen 19 ausgeführt. Die Speichenzwischenräume bilden die Rohgasdurchlässe 11. Die beschriebenen Bauteile 17, 18, 19 sind einteilig ausgeführt, z. B. als Schmiedestücke. Die Lastabtragungselemente 10 sind an die lastaufnehmenden Elemente im Druckbehälter 6 über beheizte Stützen oder eine beheizte Zarge 20 an der Kesseleinhausung 5 angeschlossen. Angedeutet wurde in der Fig. 5, daß die Lastabtragungselemente 10 zugleich als Zuführungseinrichtung für das Siedewasser einer Siedewasserkühlung der quenchrohrbildenden Rohrleitungen der Rohrwand des Quenchrohres 2 ausgeführt sind. Dazu wird auf die Rohrleitungen oder Kanäle 21 verwiesen. Die Abführung des Siedewassers erfolgt über oben an das Quenchrohr 2 bzw. dessen Rohrleitungen angeschlossene, wärmedehnungsverformbare Ableitungsrohre 22. Insoweit sind, abgesehen von den Rohrleitungen an und in den Lastabtragungselementen 10, alle Rohrleitungsverbindungen zwischen dem Quenchrohr 2 und der Kesseleinhausung 5 elastisch wärmedehnungsverformbar ausgelegt und angeordnet.

Der Vergasungsreaktor 1 bildet gegenüber der Wand des Druckbehälters 6 einen Ringraum 23. Die zuzuführenden Quenchgase werden über diesen Ringraum 23 zu dem Quenchgaseinführungsspalt 13 geführt. Der Ringraum 23 ist außerdem mit einem Druckausgleichsraum 24 verbunden, der zwischen Kesseleinhausung 5 und Druckbehälter 6 freigeblieben ist.

Der Quenchgaseinführungsspalt 13 ist im Ausführungsbeispiel besonders vorteilhaft gestaltet. Er ist gebildet zwischen einem kegelförmig eingezogenen Ausgangsbauteil 25 des Vergasungsreaktors 1 und einer dazu komplementären Schürze 26 des Quenchrohres 2. Das Ausgangsbauteil 25 ist vergasungsreaktorraumseitig frei von einer feuerfesten Auskleidung metallisch blank gestaltet. Der Kegelwinkel beträgt etwa 60°. Alle stromabwärts von dem Ausgangsbauteil 25 angeordneten Flächen sind ebenfalls frei von einer feuerfesten Auskleidung. Angedeutet wurde in der Fig. 7, daß das Ausgangsbauteil 25 des Vergasungsreaktors 1 mit einem Reinigungsring 27 versehen und dieser periodisch, z. B. mittels Klopfeinrichtung, bewegbar ist.

Um eine eindeutige Strömungsrichtung des Quenchgases durch den Spalt 13 sicherzustellen, ist der Ringraum zwischen Umfangswand des Vergasungsreaktors 1 und Druckbehälter 6 durch eine Membran 28 verschlossen. Der Druckausgleich im Bereich unterhalb der Membram wird über die Schlackeabführöffnung im Boden des Vergasungsreaktors 1 hergestellt.

## Patentansprüche

1. Vergasungsapparat für die Druckvergasung von feinteiligen Brennstoffen im Zuge der Erzeugung von Brauchgas mit einer Eintrittseinrichtung für die feinteiligen Brennstoffe, einer Gaseintrittseinrichtung, einem Vergasungsreaktor (1), einem Quenchrohr (2) für das aus dem Vergasungsreaktor austretende Rohgas, einem Konvektionskessel (3) mit Konvektionsheizflächen (4) für die Aufnahme der Abhitze des Rohgases und einer Austrittseinrichtung für die Asche, wobei die Kombination der folgenden Merkmale verwirklicht ist
a) der Vergasungsreaktor (1), das Quenchrohr (2) und der Konvektionskessel (3) mit einer Kesseleinhausung (5) sind in einem Druckbehälter (6) angeordnet, wobei der Konvektionskessel (3) das Quenchrohr (2) konzentrisch umgibt und der Vergasungsreaktor (1) koaxial unter dem Quenchrohr (2) angeordnet ist,
b) oberhalb des Quenchrohres (2) ist in der Kesseleinhausung (5) eine Umlenkeinrichtung (7) für das aus dem Quenchrohr (2) austretende und in den Konvektionskessel (3) einzuleitende Rohgas angeordnet oder ausgebildet,
c) in einem Bereich zwischen Vergasungsreaktor (1) und Konvektionskessel (3) ist eine Rohgasaustrittseinrichtung (8) angeordnet, mit der das Rohgas aus der Kesseleinhausung (5) und aus dem Druckbehälter (6) abführbar ist,
d) der Vergasungsreaktor (1) ist im unteren Teil des Druckbehälters (6) in diesem festpunktgelagert,
e) die Konvektionsheizflächen (4) sind von dem Quenchrohr (2) und der Kesseleinhausung (5) getragen,
f) das Quenchrohr (2) und die Kesseleinhausung (5) sind in ihrem unteren Bereich, oberhalb der Rohgasaustrittseinrichtung (8), auf Lastabtragungselemente (10) aufgesetzt, die Rohgasdurchlässe (11) aufweisen und am Druckbehälter (6) festpunktgelagert sind,
g) zwischen Vergasungsreaktor (1) und Quenchrohr (2) ist umlaufend ein das Quenchrohr (2) und den Vergasungsreaktor (1) trennender Quenchgaseinführungsspalt (13) angeordnet,
wobei zwischen dem Quenchrohrbereich unterhalb der Lastabtragungselemente (10) einerseits und dem Vergasungsreaktor (1) oberhalb von dessen Festpunktlagerung (9) andererseits unterschiedliche Wärmedehnungen zugelassen sind und dazu der Quenchgaseinführungsspalt (13) zusätzlich als Wärmedehnungsausgleichsspalt dimensioniert ist.

2. Vergasungsapparat nach Anspruch 1, wobei der Druckbehälter (6) zugleich als Tragwerk für den Vergasungsreaktor (1), das Quenchrohr (2) und den Konvektionskessel (3) mit Kesseleinhausung (5) statisch und stabilitätsmäßig ausgelegt ist.

3. Vergasungsapparat nach einem der Ansprüche 1 oder 2, wobei die Umlenkeinrichtung (7) als haubenförmige Prallumlenkeinrichtung ausgeführt ist.

4. Vergasungsapparat nach einem der Ansprüche 1 bis 3, wobei die Rohgasaustrittseinrichtung (8) eine Vorrichtung (14) für die Austragung von Schlacke- und/oder Aschepartikeln aufweist.

5. Vergasungsapparat nach einem der Ansprüche 1 bis 4, wobei der Vergasungsreaktor (1) in seinem unteren Bereich auf Konsolen (15) des Druckbehälters (6) festpunktgelagert ist.

6. Vergasungsapparat nach einem der Ansprüche 1 bis 5, wobei die Konvektionsheizflächen (4) einseitig an tragenden Traversen (16) befestigt, z. B. aufgehängt, sind.

7. Vergasungsapparat nach Anspruch 6, wobei die Traversen (16) an die Kesseleinhausung (5) und an das Quenchrohr (2) einspannungsfrei angeschlossen sind.

8. Vergasungsapparat nach einem der Ansprüche 1 bis 7, wobei die Lastabtragungselemente (10) als starre metallische Bauteile mit Innenring (17), Außenring (18) und Speichen (19) ausgeführt sind und die Speichenzwischenräume die Rohgasdurchlässe (11) bilden.

9. Vergasungsapparat nach einem der Ansprüche 1 bis 8, wobei die Lastabtragungselemente (10) an die lastaufnehmenden Elemente im Druckbehälter (6) über beheizte Stützen oder eine beheizte Zarge (20) an der Kesseleinhausung (5) angeschlossen sind.

10. Vergasungsapparat nach einem der Ansprüche 1 bis 9, wobei die Lastabtragungselemente (10) zugleich als Zuführungseinrichtung für das Siedewasser einer Siedewasserkühlung der quenchrohrbildenden Rohrleitungen ausgeführt sind.

11. Vergasungsapparat nach einem der Ansprüche 1 bis 10, wobei abgesehen von Rohrleitungen an und in den Lastabtragungselementen (10) alle Rohrleitungsverbindungen zwischen dem Quenchrohr (2) und der Kesseleinhausung (5) elastisch wärmedehnungsverformbar ausgelegt und angeordnet sind.

12. Vergasungsapparat nach einem der Ansprüche 1 bis 11, wobei der Vergasungsreaktor (1) gegenüber der Wand des Druckbehälters (6) einen Ringraum (23) bildet und die Zuführung des Quenchgases zu dem Quenchgaseinführungsspalt (13) über diesen Ringraum (23) erfolgt, wobei der Ringraum (23) außerdem mit einem Druckausgleichsraum (24) in Verbindung steht, der zwischen Kesseleinhausung (5) und Druckbehälter (6) angeordnet ist.

13. Vergasungsapparat nach einem der Ansprüche 1 bis 12, wobei der Quenchgaseinführungsspalt (13) zwischen einem kegelförmig eingezogenen Ausgangsbauteil (25) des Vergasungsreaktors (1) und einer dazu komplementären Schürze (26) des Quenchrohres (2) gebildet ist und wobei das Ausgangsbauteil (25) vergasungsreaktorraumseitig auskleidungsfrei ausgeführt ist.

14. Vergasungsapparat nach Anspruch 13, wobei das Ausgangsbauteil (25) des Vergasungsreaktors (1) mit einem Reinigungsring (27) versehen und dieser periodisch, z. B. mittels Klopfeinrichtung zum Zwecke der Abreinigung bewegbar ist.

15. Vergasungsapparat nach einem der Ansprüch 1 bis 14, wobei die Konvektionsheizflächen (4) zu mehreren Bündeln zusammengefaßt sind, die übereinander angeordnet und selbstständig von dem Quenchrohr (2) sowie der Kesseleinhausung (5) getragen sind.

## Claims

1. A gasification device for the pressure gasification of particulate fuel as part of the generation of service gas including an inlet device for the particulate fuel, a gas inlet means, a gasification reactor (1), a quench pipe (2) for the crude gas discharged from the gasification reactor, a convection boiler (3) containing convection heating surfaces (4) for absorbing the waste heat of the crude gas and an ash discharge means, incorporating the combination of the following features:
a) the gasification reactor (1), the quench pipe (2) and the convection boiler (3) including a boiler housing (5) being arranged inside a pressure container (6), the convection boiler concentrically surrounding the quench pipe (2) and the gasification reactor (1) being arranged coaxially below the quench pipe (2);
b) a redirecting device (7) for discharging the crude gas from the quench pipe (2) and passing it to the convection boiler (3) being arranged or formed in the boiler housing (5) above the quench pipe (2);
c) a crude gas discharge means (8) being arranged in an area between the gasification reactor (1) and the convection boiler (3) to discharge the crude gas from the boiler housing (5) and the pressure container (6);
d) the gasification reactor (1) having a fixed point bearing in the lower part of the pressure container (6);
e) the convection heating surfaces (4) being supported by the quench pipe (2) and the boiler housing (5);
f) the quench pipe (2) and the boiler housing (5) being positioned on load shedding elements (10) in the lower area above the crude gas discharge means (8) containing crude gas passages (11) and having a fixed point bearing on the pressure container (6);
g) a quench gas inlet gap (13) separating the quench pipe (2) and the gasification reactor (1) being arranged circumferentially between the gasification reactor (1) and the quench pipe (2);
and in which between the quench pipe area below the load shedding elements (10) on one hand and the gasification reactor (1) above its fixed point bearing (9) on the other hand, different thermal expansions are allowed and in which the quench gas inlet gap (13) also serves as a thermal expansion compensation gap (13) for this purpose.

2. A gasification device according to claim 1, in which the pressure container (6) is also designed as a support for the gasification reactor (1), with the quench pipe (2) and the convection boiler (3) including the boiler housing (5), being of a respective static and stable design.

3. A gasification device according to one of the claims 1 or 2, in which the redirecting device (7) is designed as a hood-shaped redirecting impact unit.

4. A gasification device according to one of the claims 1 to 3 in which the crude gas outlet device (8) contains a device (14) for discharging slag and/or ash particles.

5. A gasification device according to one of the claims 1 to 4 in which the gasification reactor (1) contains fixed point bearings in its lower area on brackets (15) of the pressure container (6).

6. A gasification reactor according to one of the claims 1 to 5, in which the convection heating surfaces (4) are fixed i.e. suspended on one side on supporting crossheads (16).

7. A gasification device according to claim 6, in which the crossheads (16) are connected without clamping to the boiler housing (5) and the quench pipe (2).

8. A gasification device according to one of the claims 1 to 7 in which the load shedding elements (10) are rigid metallic components containing an internal ring (17), an external ring (18) and spokes (19) and the spoke gaps form the crude gas passages (11).

9. A gasification device according to one of the claims 1 to 8, in which the load shedding elements (10) are connected to the load absorbing elements in the pressure container (6) via heated supports or a heated frame (20) on the boiler housing (5).

10. A gasification device according to claims 1 to 9 in which the load shedding elements (10) also serve as supply means for the boiling water of a boiling water cooler of the quench pipe forming pipework.

11. A gasification device according to one of the claims 1 to 10, in which apart form the pipework at and in the load shedding elements (10) all pipe connections between the quench pipe (2) and the boiler housing (5) are designed and arranged as elastic and thermally expanding pipes.

12. A gasification device according to one of the claims 1 to 11 in which the gasification reactor (1) forms an annulus (23) opposite the wall of the pressure container (6) and the quench gas is passed to the quench gas inlet gap (13) via this annulus (23), the annulus (23) also being connected to a pressure compensation area (24) arranged between the boiler housing (5) and the pressure container (6).

13. A gasification device according to one of the claims 1 to 12, in which the quench gas inlet gap (13) is formed between a conically-shaped retracted discharge assembly (25) of the gasification reactor (1) and a complimenting apron (26) of the quench pipe (2) and in which the discharge component (25) contains no lining on the gasification reactor side.

14. A gasification device according to claim 13, in which the discharge assembly (25) of the gasification reactor (1) contains a cleaning ring (27), periodically movable for cleaning by i.e. a tapping device.

15. A gasification device according to one of the claims 1 to 14, in which the convection heating surfaces (4) are arranged in several bundles above one another and are independently supported by the quench pipe (2) and the boiler housing (5).

## Revendications

1. Appareil pour gazéification par la gazéification sous pression de combustible pondéreux fin dans le cadre de la production de gaz industriel avec un dispositif d'introduction du combustible pondéreux fin, un dispositif d'entrée de gaz, un réacteur de gazéification (1), un tube de refroidissement (2) pour le gaz brut sortant du réacteur de gazéification, une chaudière à convection (3) avec surfaces de chauffe à convection (4) pour l'absorption de la chaleur du gaz brut et un dispositif de sortie pour les cendres, la combinaison des différentes caractéristiques étant réalisée comme suit
a) le réacteur de gazéification (1), le tube de refroidissement (2) et la chaudière à convection (3) avec un capot de chaudière (5) sont placés dans un réservoir sous pression (6), la chaudière à convection (3) enveloppant concentriquement le tube de refroidissement (2), et le réacteur de gazéification (1) étant placé d'une façon coaxiale sous le tube de refroidissement (2),
b) au-dessus du tube de refroidissement (2) est placé un dispositif de déviation (7) à l'intérieur du capot de chaudière (5), pour le gaz brut sortant du tube de refroidissement (3) et dirigé ou formé vers la chaudière à convection (3),
c) dans une zone comprise entre le réacteur de gazéification (1) et la chaudière à convection (3), un dispositif de sortie de gaz brut (8) est installé, avec lequel le gaz brut sortant du capot de la chaudière (5) et du réservoir sous pression (6) est transportable,
d) le réacteur de gazéification (1) est fixé en un point sur un palier dans la partie inférieure du réservoir sous pression (6),
e) les surfaces de chauffage par convection (4) sont supportées par le tube de refroidissement (2) et par le capot de la chaudière (5),
f) le tube de refroidissement (2) et le capot de la chaudière (5) reposent dans leur partie inférieure, au-dessus du dispositif de sortie du gaz brut (8), sur des éléments-supports de charge (10) qui comprennent des passages pour le gaz brut (11) et qui sont fixés en un point sur un palier sur le réservoir sous pression (6),
g) entre le réacteur de gazéification (1) et le tube de refroidissement (2) est disposée une fente d'entrée de gaz (13) autour du tube de refroidissement (2) séparant le tube de refroidissement (2) et le réacteur de gazéification (1), différentes dilatations étant autorisées entre la zone du tube de refroidissement en-dessous des éléments-supports de charge (10) d'une part et le réacteur de gazéification (1) au-dessus de son point d'attache fixe (9) d'autre part, et la fente d'entrée de gaz (13) étant en outre dimensionnée comme fente de compensation de dilatation par la chaleur.

2. Appareil de gazéification selon la revendication 1, le réservoir sous pression (6) étant en même temps étudié statiquement et d'une façon stable pour supporter le réacteur de gazéification (1), le tube de refroidissement (2) et la chaudière à convection (3) avec son capot (5).

3. Appareil de gazéification selon une des revendications 1 et 2, le dispositif de déviation (7) étant construit comme capot enveloppant.

4. Appareil de gazéification selon une des revendications 1 à 3, le dispositif de sortie du gaz (8) prévoyant un dispositif (14) pour l'enlèvement des scories et/ou des cendres.

5. Appareil de gazéification selon une des revendications 1 à 4, le réacteur de gazéification (1) étant fixé en un point par un palier sur des bras (15) du réservoir sous pression (6).

6. Appareil de gazéification selon une des revendications 1 à 5, les surfaces de chauffage par convection (4) étant fixées, ou suspendues par exemple, sur un côté sur l'entretoise-support (16).

7. Appareil de gazéification selon la revendication 6, les entretoises (16) étant fixées sans tension sur le capot de la chaudière (5) et sur le tube de refroidissement (2).

8. Appareil de gazéification selon une des revendications 1 à 7, les éléments-supports de charge (10) étant exécutés comme éléments métalliques rigides avec anneau intérieur (17), anneau extérieur (18) et rayons (19), l'espace entre les rayons faisant fonction de passage pour le gaz (11).

9. Appareil de gazéification selon une des revendications 1 à 8, les éléments-supports de charge (10) étant raccordés aux éléments-supports dans le réservoir sous pression (6) par des supports chauffés, ou un cadre chauffé (20), sur le capot de la chaudière (5).

10. Appareil de gazéification selon une des revendications 1 à 9, les éléments-supports de charge (10) formant en même temps le dispositif d'introduction de l'eau de refroidissement pour un refroidissement par eau bouillante des tuyaux formant les tuyaux de refroidissement.

11. Appareil de gazéification selon une des revendications 1. à 10., tous les tuyaux, sauf ceux sur et dans les éléments-supports de charge (10), sont formés de matériaux élastiques déformables à la chaleur entre le tube de refroidissement (2) et le capot de la chaudière (5).

12. Appareil de gazéification selon une des revendications 1 à 11, le réacteur de gazéification (1) formant par rapport à la paroi du réservoir sous pression (6) un espace annulaire (23), et l'amenée du gaz à la fente d'entrée du gaz (13) s'effectuant par l'espace annulaire (23), cet espace annulaire (23) étant en outre en liaison avec un espace de compensation de pression (24) qui est placé entre le capot de la chaudière (5) et le réservoir sous pression (6).

13. Appareil de gazéification selon une des revendications 1 à 12, la fente d'entrée du gaz (13) étant placée entre une pièce de sortie conique (25) du réacteur de gazéification (1) et un tablier complémentaire (26) pour le tube de refroidissement (2), la pièce de sortie (25) du réacteur de gazéification étant montée sans capot côté espace.

14. Appareil de gazéification selon la revendication 13, la pièce de sortie (25) du réacteur de gazéification (1) étant complétée par un anneau de nettoyage (27), et celui-ci étant mobile pour pouvoir être déplacé périodiquement, p.ex. au moyen d'un dispositif à chocs pour le nettoyage.

15. Appareil de gazéification selon une des revendications 1 à 14, les surfaces de chauffage par convection (4) étant rassemblées en plusieurs faisceaux qui sont placés l'un sur l'autre et qui sont supportés de manière autonome par le tube de refroidissement (2), ainsi que par le capot de la chaudière (5).
